(19) **Europäisches Patentamt European Patent Office Office européen des brevets**

(11) **EP 3 142 531 B1**

(12) **EUROPEAN PATENT SPECIFICATION**

(45) Date of publication and mention of the grant of the patent:
**10.03.2021 Bulletin 2021/10**

(21) Application number: **15719709.6**

(22) Date of filing: **29.04.2015**

(51) Int Cl.:
**A47J 31/52** (2006.01)   **A47J 43/00** (2006.01)
**A47J 43/08** (2006.01)

(86) International application number:
**PCT/EP2015/059345**

(87) International publication number:
**WO 2015/173021 (19.11.2015 Gazette 2015/46)**

(54) **AUTOSTOP FUNCTION IN A KITCHEN DEVICE**

AUTOSTOPPFUNKTION IN EINER KÜCHENVORRICHTUNG

FONCTION D'ARRÊT AUTOMATIQUE D'UN DISPOSITIF DE CUISINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2014 EP 14167937**

(43) Date of publication of application:
**22.03.2017 Bulletin 2017/12**

(73) Proprietor: **BSH Hausgeräte GmbH**
**81739 München (DE)**

(72) Inventors:
- **ORBANIC, Henri**
**1000 Ljubljana (SI)**
- **UPLAZNIK, Marko**
**3312 Prebold (SI)**
- **POGACAR, Toni**
**3311 Sempeter (SI)**
- **PACNIK, Roman**
**2383 Smartno pri Slovenj Gradcu (SI)**

(56) References cited:
**US-A- 4 747 690**      **US-A- 5 539 288**
**US-A1- 2006 086 843**

**Description**

*Background of the invention*

The present invention relates to the field of automatic control of operation of a kitchen device according to parameters measured during food processing.

*State of the art*

In the process of making cream, dough, egg white foam and similar products requiring whisking or kneading, it is very important to stop the processing in the right moment so as to avoid overprocessing which can result in a useless product (e.g. cream turning to butter). This is especially important when preparing whipped cream. The processing should be stopped at the correct moment when the cream (foam) has the right firmness and is not turning into butter yet. For the egg white this transition is not so critical but still by stopping whipping at the correct moment, the flakiness of the egg white foam can be avoided.

Many kitchen appliances, such as kitchen machines, food processors, stick mixers, specialized appliances, are used to prepare cream, dough, egg white foam and similar products requiring whisking or kneading. There are several known kitchen appliances that are adapted to stop the processing of the food automatically. In US 5,539,288 (EP 0 555 902 B1) mechanical torque is measured on the beater shaft. As the firmness of the cream increases so does the torque necessary to move the beater. Another similar method is measuring the increase of the consumed electrical power as a consequence of the increased torque in the beater shaft. Two such solutions are presented in US 5,539,288 JP 2001095408.

Solutions regarding kneading dough are more developed and can be found in patent applications. In US 4,747,690 an apparatus and method for controlling the quality of bread dough is provided. By using instruments such as strain gauge, thermometer, weighing device and pH meter they measure temperature, weigh and pH of bread dough and strain caused on an agitator. The measured data is compared with previously stored data and corrections of kneading process are made but also decision about the duration and the end of kneading can be made.

In US 5,556,198 a multipurpose electric food mixing appliance for mixing and kneading bread dough can sense when dough is properly kneaded and automatically shuts itself off. The load on the appliance motor during kneading of the dough is monitored by monitoring the power supplied to such motor and the motor is stopped when the load on the motor begins to decrease after a period of-increasing load.

In US 6,656,515 a method for controlling the mixing of dough ingredients in a mixer is presented. The amount of power supplied to the mixer is measured in specified time intervals and data relating to the amount of power supplied are stored. Based on the stored data, a decline in the amount of power supplied to the mixer is identified and the mixer mixes the dough ingredients for a predetermined period of time after the decline is identified.

US 2006/086843 A1 discloses a blender that can process food items contained therein in accordance with food processing conditions determined by the blender.

The known methods are able to automatically stop processing using cut-off thresholds of various types, including detecting the threshold of derivative of the torque in cream whipping and detection of decreasing power usage in dough kneading. However, the ingredients used as well as their temperature and other parameters differ significantly. Therefore it is very difficult to detect the optimal point for stopping of the processing without a more sophisticated control of the parameters during the whole time of the processing. A way to assess the range of parameters to trigger the stop that would take into account the development of important parameters with time would be beneficial for more precise auto-stop timing.

*Problem to be solved*

The object underlying the present invention is to provide an improvement in the process of automatic stopping of operation of a kitchen device.

*Solution according to the invention*

In order to achieve the object underlying the invention, the present invention provides a kitchen device for processing of food ingredients according to claim 1. Advantageous embodiments that can be implemented by themselves or in combination are described in dependent claims.

According to an aspect of the disclosure a kitchen device for processing of food ingredients comprising at least a motorized driving means, one or more connecting means for connection of various attachments and a user control means for controlling the operation of the kitchen device, wherein the kitchen device also comprises a sensing module adapted to sense in real-time a parameter dependent on the power consumption of the kitchen device, a calculating module adapted to collect and process the data acquired from the said sensing module and a decision module able to automatically stop the operation of the kitchen device at the time point when the parameters from said calculating module are within a predetermined range that is adjusted according to measurements during processing. The real-time data collected by the sensing module is used by the calculating module to assess the trend using the moving average. The moving averages calculated by the calculating module are transmitted to the decision module that is able to use those to decide when to stop the operation of the machine. This decision is not only dependent on the data received from the calculating module but also on the initial programming set by the user at the user interface regarding type of processing and quantities, possible data from other sensors in the kitchen device, such as weight and temperature and finally on the time-course of the calculated parameters themselves. The algorithms used for various types of processing are able to adjust the ranges where the stopping occurs accordingly.

The objective of the invention is achieved through improving of the process of automatic stopping of operation of a kitchen device through introducing additional calculating capabilities of the calculating module (e.g. second derivative) and dynamically adjusting the ranges where the decision module triggers the auto-stop function.

*Embodiments of the invention*

According to a preferred embodiment, the said parameter dependent on the power consumption of the kitchen device is current consumption, torque applied to the shaft of connecting means, direct measurement of rotation speed with regard to the selected speed and working tool and similar. It is important to select one of the parameters for monitoring the processing of the food that is directly dependent on the force used to process the ingredients. Since the processes in cream whipping, egg white whipping, kneading and similar result in the change in physical parameter of the processed food, these changes result in changes in needed force appliend to the kitchen machine and can be used to determine the point at which the process reaches the stage at which it should be stopped.

According to the invention the said processing of the data acquired from the sensing module includes calculating a moving average of the second derivative of the data acquired from the said sensing module. The moving average is preferably used as the signal from the sensing modules has considerable point-to-point variability as the processed food is unevenly processed or unevenly distributed during processing. Additionally, the working tool rotates in some cases considerably slower than the data harvesting rate which results in cyclic oscillations of the signal. Additionally, the signal can also vary due to power grid variations, motor specifics and other. Often it is beneficial to use first and second derivatives in order to determine points when certain physical processes in the processed foods occur as early as possible. For example, in whipped cream it may be too late to detect the maximum of the used power as the cream may already starting to turn into butter before this point is detected by the decision module. Therefore, the second derivative is used and the resulting point of decision is a little earlier.

Furthermore, the decision module makes decisions regarding stopping of the kitchen device only after the predetermined run-in time has elapsed to avoid reacting to artifacts resulting from the variations in the power consumption by the kitchen device in the first phase of food processing. Since often variations in the force applied by the kitchen machine in the forst phase of the processing is very variable as a result of the fact that the ingredients are not yet in the homogeneous mixture, the signals from the sensing module are collected in order to allow later adjustment of the decision parameters but the decision module disregards them for either a predetermined time or until a desired signal feature is detected, depending on the process that is performed and selected at the user interface.

Additionally, the said modules are positioned within the kitchen device in such a way that the sensing module continuously receives data from the kitchen device, these data are transmitted to the calculating module that calculates the derivatives and moving averages and is able to adjust the predefined parameter ranges accordingly and the decision module receives these data, compares them with parameter ranges and is able to transmit the resulting stop mechanism to the control mechanism within the kitchen device that then stops operation. It is important that the said modules are able to receive the information from the user interface to identify the process that is performed, possibly also quantity range and other information, to receive continuous information of the current force used by the kitchen device, calculate and adjust the variables and ranges, make a decision on when to stop the processing and be able to transmit this decision to the mechanism for stopping the kitchen device.

It is also conceivable the said modules (sensing, calculating, decision) may be a part of a single central processing unit. This results in space saving, cost saving and also prevention of software conflicts.

In a preferred embodiment, the user control means is adapted to allow the user to chose between various quantities of the processed food or types of the prepared product, e. g. firmness of whipped cream, which results in the adjustment of the parameters triggering the decision module. This allows for the decision module to use one of the protocols that are predetermined for various possible selections of the type of processing by the user.

In another embodiment the kitchen device is adapted to perform the auto-stop function in the process of cream whipping. Cream whipping is one of the most common uses and it specifically requires the whipping to be stopped before the cream starts turning into butter.

In a further embodiment, the kitchen device is adapted to perform the auto-stop function in the process of whipping egg whites.

In another further embodiment, the kitchen device is adapted to perform the auto-stop function in the process of kneading.

Advantageous embodiments and developments which can be used individually or in combination with one another are the subject matter of the dependent claims.

## Brief description of the drawings

Figure 1 Moving average trend line for interval p of 10 seconds and the corresponding leading coefficient k for every second;

Figure 2 An example of load change during whipping of cream (upper) and the trend line leading coefficient prediction during whipping (bottom);

Figure 3 An example of load change during whipping of egg white (upper) and the trend line leading coefficient prediction during whipping (bottom);

Figure 4 An example of load change during kneading of bread dough (upper) and the trend line leading coefficient prediction during kneading (bottom).

## Detailed description of the invention

The measurements of the force used by the kitchen machine, or one of the parameters related to it, can be used to monitor the stage of the processing of the food within the bowl of the kitchen machine. Such parameters include torque, current measurements, rotation speed and similar. Torque can be measured directly or more commonly through the electric current change drawn by the electric motor used for driving the kitchen device. One of the common methods for observing the change of the signal is to use its first derivative. The problem of using derivation for predicting the change of the load is that it considers too short a time interval and is thus oversensitive to the noise in the signal. That is why this method, if the signal is not significantly smoothed, is not robust enough to be used for predicting the trend of the signal.

Moving averages are a more robust method. The shorter the interval used to calculate the moving average the faster changes in signal can be predicted. If the time interval is increased long term trends can be predicted while shorter fluctuations are missed. That is why the length of the interval has to be adjusted to the type of process and events which we want to forecast.

If the moving average is increasing sequentially it shows a trend of increasing. The problem is how to make an automatic decision if the trend is rising, how strong it is or how long does it last. That is why it is better in contrast to just calculate the average over certain moving interval p, to calculate a $1^{st}$ degree polynomial over this interval or fit a line

$$(y = k^* x_{[i-i+p]} + n).$$

The sign and the size of the leading coefficient k can be used for reliable and robust forecasting of certain events. If dynamic events detection is desired the trend line is fitted on a shorter interval while long term trends are predicted by using longer period. Also the prediction is based only on the shape of the signal and not its magnitude.

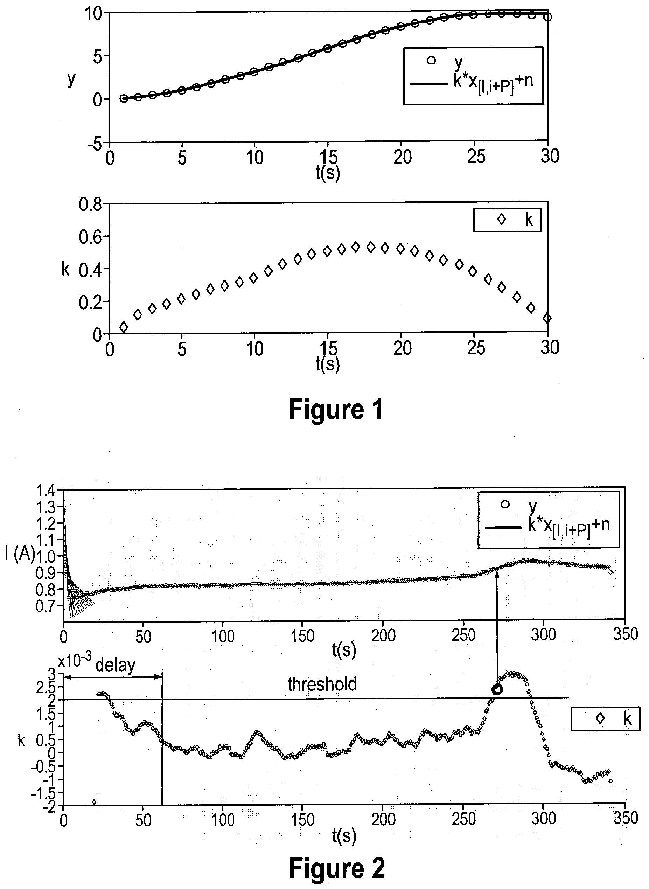

In Figure 1, the usage of trend lines (black lines) is presented with a 30 second long signal y. The leading coefficient k of each line is plotted separately for each second. It can be seen that k in the beginning shows an increasing rate of the signal. At the maximal inclination of the signal k reaches its peak and is then gradually reduced which indicates that the signal will flatten. If it falls under zero then the signal value is reducing. It can also be seen that the trend line method under predicts because the signal values are already reducing while the k value is still positive. This can be reduced by shortening the trend line interval but will on other hand reduce the robustness of prediction as the sensitivity to change will also increase. That is why the optimum interval length needs to be determined for the process which we want to forecast.

In figure 2, the calculation and decision steps for cream whipping are presented. This is a quick to medium long process which on different kitchen machines and depending on the type and quantity of the cream can last from 30 second and up to 6 minutes at the maximum whipping velocity. The whipping process incorporates air into the cream thus making it firmer and increasing the volume. This results in an increased force load on the kitchen device. Although various types of creams differ, the whipping process is the same for all. That is why despite the different lengths of whipping time, the way the load increases (or the load signal shape) is the same or similar in each case.

To make a precise decision on when to stop the whipping process, the first priority is preventing overheating i.e. making butter. The second priority is not stopping whipping prematurely. In the beginning, as shown in Figure 2, there is an interval where no decisions are made because the too large fluctuations caused by turning on of the kitchen device and the inertial influences as the fluid needs to be pushed into motion. After the load stabilizes, decisions can be made. The point of stopping is determined by using the threshold leading coefficient k which is determined from experience depending on the machine type and the quantity of the whipped cream selected by the user or possibly detecting by sensors within the kitchen device (such as weight sensors, NIR sensors, etc.). This point is located on the slope where the load is increasing as there the cream has the right consistency from the point of end user. In order to be sure, the machine is stopped after k is bigger than threshold for at least one more second. The point of maximum load is from the experience not usable for prediction because at that time the cream is already too hard and close to turning into butter. Also it is harder to reliably predict this point before the cream starts to turn to butter.

To be on the safe side additional timer is introduced for cases where certain creams are hard to whip or the quantity is very small, because the load does not increase sufficiently in order to reach the required threshold. The length of the whipping time for this timer is determined from experience and is used only for exceptional cases as a backup. If the cream does not whip until then, there is also the possibility of bad cream used or kitchen device not properly set.

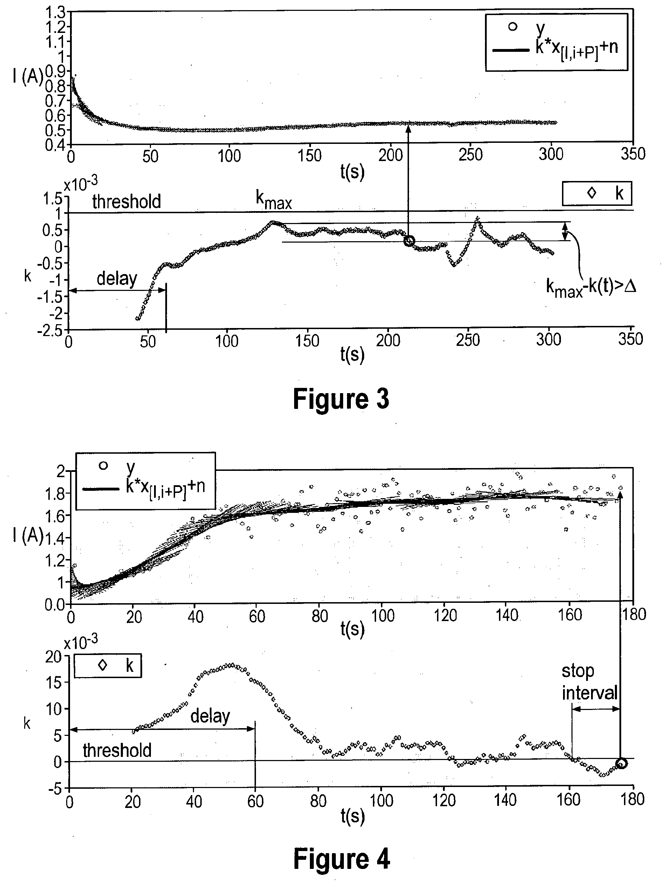

In figure 3, the calculation and decision steps for egg white whipping are presented. This is a medium long process which can on ordinary kitchen devices depending on the quantity of egg whites take from 3 to 5 minutes. The whipping process, similarly to cream whipping, incorporates air and the volume of egg whites increases. This shows as an increased load. In contrast to cream which if it is overbeat goes to butter, the egg white does not and thus the load stabilizes after certain time. The deciding point for stopping whipping process is when certain threshold is reached. A few seconds after threshold is reached the whipping is stopped by the decision module. Because whipping of egg white produces lesser load than in case of cream this threshold is not reached every time. That is why the second dynamic rule is needed. This one detects the maximum coefficient $k_{max}$ and if after certain time after $k_{max}$ is reached the difference between $k_{max}$ and $k(t)$ is bigger than predetermined value A, the whipping process will stop as the load has stabilized.

As in the case of cream additional timer is introduced for cases where smaller quantities are concerned as the load does not increase sufficiently in order to reach the required threshold or be detected by the second rule. The length of this timer is determined from experience but is usually up to 5 minutes but could be more or less depending on the type of processor. If the egg white does not whip there are usually problems with egg quality or kitchen device not properly set.

In figure 3, the calculation and decision steps for kneading of bread dough are presented. For kneading of dough the trend line interval is longer because the load varies significantly during the kneading phase. Larger interval smoothes out large variations caused by hook kneading and thus makes forecasting more reliable. On the other hand this increases lag of detection but in this type of process it is not so influential because the changes in dough are not so fast and critical.

Detection methods which detect when the bread is developed determine when the load is maximal and work only if the hook is almost all the time in contact with the dough. This is true for most of the professional kneading machines. In case of kitchen machines this is difficult to achieve because of the machine design. This causes the detected load to vary because of contact issues and not because of changes in the dough. On the other hand there is a noticeable feature that the load on the machine significantly stabilizes when a dough mass is formed around the hook. That is why the deciding point is determined by detecting when this load stabilizes or like shown in Figure 4 when coefficient $k$ drops under 0 after the load stops to increase. In order to have a reliable decision the kitchen device stops if $k$ is less than 0 for predetermined number of seconds after this point is reached. His also works for cases of not proper ratio between dry components of dough and water. If there is less water than required the dough wont form and he load will stabilize. Then the user has to add more after to finish the process. Also of there is too much water the dough will be soft and sticky and the load will also stabilize. Usually adding more flour will help finish the process.

As in the case of cream additional timer is introduced for cases where smaller quantities are concerned (difficulty for kneading hook to gather all ingredients) as the load does not change sufficiently to be detected by before mentioned rule. The length of this timer is determined from experience but is usually up to 10 minutes but could be more or less depending on the type of processor.

**Claims**

1. A kitchen device for processing of food ingredients, comprising at least a motorized driving means, one or more connecting means for connection of various attachments and a user control means for controlling the operation of the kitchen device and the kitchen device also comprises a sensing module adapted to sense in real-time a parameter dependent on the power consumption of the kitchen device, a calculating module adapted to collect and process the data

   acquired from the said sensing module and a decision module able to automatically stop the operation of the kitchen device at the time point when the parameters from said calculating module are within a predetermined range wherein the predetermined range is adjusted according to measurements during processing **characterized in that** the said processing of the data acquired from the sensing module includes calculating a moving average of the second derivative of the data acquired from the said sensing module.

2. The kitchen device according to claim 1, **characterized in that** the said parameter dependent on the power consumption of the kitchen device is current consumption, torque applied to the shaft of connecting means, direct measurement of rotation speed with regard to the selected speed and working tool.

3. The kitchen device according to any of the previous claims, **characterized in that** the decision module makes decisions regarding stopping of the kitchen device only after the predetermined run-in time has elapsed to avoid reacting to artifacts resulting from the variations in the power consumption by the kitchen device in the first phase of food processing.

4. The kitchen device according to any of the previous claims, **characterized in that** the said modules are positioned within the kitchen device in such a way that the sensing module continuously receives data from the kitchen device, these data are transmitted to the calculating module that calculates the derivatives and moving averages and is able to adjust the predefined parameter ranges accordingly and the decision module receives these data, compares them with parameter ranges and is able to transmit the resulting stop mechanism to the control mechanism within the kitchen device that then stops operation.

5. The kitchen device according to any of the previous claims, **characterized in that** the said modules (sensing, calculating, decision) may be a part of a single central processing unit.

6. The kitchen device according to any of the previous claims, **characterized in that** the user control means is adapted to allow the user to choose between various quantities of the processed food or types of the prepared product, e. g. firmness of whipped cream, which results in the adjustment of the parameters triggering the decision module.

7. The kitchen device according to any of the previous claims, **characterized in that** the kitchen device is adapted to perform the auto-stop function in the process of cream whipping.

8. The kitchen device according to any of the previous claims, **characterized in that** the kitchen device is adapted to perform the auto-stop function in the process of whipping egg whites.

9. The kitchen device according to any of the previous claims, **characterized in that** the kitchen device is adapted to perform the auto-stop function in the process of kneading.

**Patentansprüche**

1. Küchenvorrichtung zum Verarbeiten von Nahrungsbestandteilen, die zumindest ein motorisiertes Antriebsmittel, ein oder mehrere Anschlussmittel zum Anschließen verschiedener Zubehörteile und ein Benutzersteuermittel zum Steuern des Betriebs der Küchenvorrichtung umfasst, wobei die Küchenvorrichtung auch ein Sensormodul, das so ausgelegt ist, dass es in Echtzeit einen von der Leistungsaufnahme der Küchenvorrichtung abhängigen Parameter erfasst, ein Berechnungsmodul, das so ausgelegt ist, dass es die aus dem Sensormodul gewonnenen Daten sammelt und verarbeitet, und ein Entscheidungsmodul umfasst, das in der Lage ist, den Betrieb der Küchenvorrichtung zu dem Zeitpunkt automatisch einzustellen, an dem die Parameter aus dem Berechnungsmodul in einem vorgegebenen Bereich liegen, wobei der vorgegebene Bereich Messwerten bei der Verarbeitung entsprechend angepasst wird, **dadurch gekennzeichnet, dass** die Verarbeitung der aus dem Sensormodul gewonnenen Daten das Berechnen eines gleitenden Mittelwerts der zweiten Ableitung der aus dem Sensormodul gewonnenen Daten umfasst.

2. Küchenvorrichtung nach Anspruch 1, **dadurch gekennzeichnet, dass** es sich bei dem von der Leistungsaufnahme der Küchenvorrichtung abhängigen Parameter um den Stromverbrauch, ein an der Welle von Anschlussmitteln anliegendes Drehmoment, einen direkten Messwert der Drehzahl in Bezug auf die ausgewählte Geschwindigkeit und das Arbeitswerkzeug handelt.

3. Küchenvorrichtung nach einem der vorhergehenden Ansprüche, **dadurch gekennzeichnet, dass** das Entscheidungsmodul erst nach Ablauf der vorgegebenen Einlaufzeit Entscheidungen bezüglich des Stoppens der Küchenvorrichtung trifft, um ein Reagieren auf Artefakte zu vermeiden, die durch Schwankungen bei der Leistungsaufnahme der Küchenvorrichtung in der ersten Phase der Nahrungsmittelverarbeitung entstehen.

4. Küchenvorrichtung nach einem der vorhergehenden Ansprüche, **dadurch gekennzeichnet, dass** die Module so in der Küchenvorrichtung angeordnet sind, dass das Sensormodul kontinuierlich Daten aus der Küchenvorrichtung empfängt, diese Daten zum Berechnungsmodul übertragen werden, das die Ableitungen und die gleitenden Mittelwerte berechnet und in der Lage ist, die vorgegebenen Parameterbereiche entsprechend anzupassen, und das Entscheidungsmodul diese Daten empfängt, sie mit den Parameterbereichen vergleicht und in der Lage ist, den entstehenden Stoppmechanismus zu dem Steuermechanismus in der Küchenvorrichtung zu übertragen, der dann den Betrieb einstellt.

5. Küchenvorrichtung nach einem der vorhergehenden Ansprüche, **dadurch gekennzeichnet, dass** es sich bei den Modulen (Sensor-, Berechnungs-, Entscheidungsmodul) um einen Bestandteil einer einzelnen Zentraleinheit handeln kann.

6. Küchenvorrichtung nach einem der vorhergehenden Ansprüche, **dadurch gekennzeichnet, dass** das Benutzersteuermittel so ausgelegt ist, dass es dem Benutzer ermöglicht, zwischen verschiedenen Mengen des verarbeiteten Nahrungsmittels oder Arten des zubereiteten Produkts, z.B. Steifigkeit von Schlagsahne, auszuwählen, was dazu führt, dass die Anpassung der Parameter das Entscheidungsmodul aktiviert.

7. Küchenvorrichtung nach einem der vorhergehenden Ansprüche, **dadurch gekennzeichnet, dass** die Küchenvorrichtung so ausgelegt ist, dass sie die Autostoppfunktion im Verlauf des Sahneschlagens ausübt.

8. Küchenvorrichtung nach einem der vorhergehenden Ansprüche, **dadurch gekennzeichnet, dass** die Küchenvorrichtung so ausgelegt ist, dass sie die Autostoppfunktion im Verlauf des Schlagens von Eiweiß ausübt.

9. Küchenvorrichtung nach einem der vorherigen Ansprüche, **dadurch gekennzeichnet, dass** die Küchenvorrichtung so ausgelegt ist, dass sie die Autostoppfunktion im Verlauf des Knetens ausübt.

## Revendications

1. Dispositif de cuisine pour le traitement d'ingrédients alimentaires, comprenant au moins un moyen d'entraînement motorisé, un ou plusieurs moyens de connexion pour la connexion de divers accessoires et un moyen de commande par utilisateur pour la commande du fonctionnement du dispositif de cuisine et le dispositif de cuisine comprend également un module de détection conçu pour détecter en temps réel un paramètre dépendant de la consommation d'énergie du dispositif de cuisine, un module de calcul conçu pour collecter et traiter les données acquises à partir dudit module de détection et un module de décision apte à arrêter automatiquement le fonctionnement du dispositif de cuisine au moment où les paramètres issus dudit module de calcul sont au sein d'une plage prédéterminée dans lequel la plage prédéterminée est ajustée en fonction de mesures au cours du traitement, **caractérisé en ce que** ledit traitement des données acquises à partir du module de détection inclut le calcul d'une moyenne mobile de la dérivée seconde des données acquises à partir dudit module de détection.

2. Dispositif de cuisine selon la revendication 1, **caractérisé en ce que** ledit paramètre dépendant de la consommation d'énergie du dispositif de cuisine est une consommation de courant, un couple appliqué à l'arbre des moyens de connexion, la mesure directe d'une vitesse de rotation par rapport à la vitesse et à l'outil de travail sélectionnés.

3. Dispositif de cuisine selon l'une quelconque des revendications précédentes, **caractérisé en ce que** le module de décision prend des décisions concernant l'arrêt du dispositif de cuisine uniquement après que le délai de mise en route prédéterminé s'est écoulé pour éviter de réagir à des artefacts résultant des variations dans la consommation d'énergie par le dispositif de cuisine dans la première phase de traitement d'aliments.

4. Dispositif de cuisine selon l'une quelconque des revendications précédentes, **caractérisé en ce que** lesdits modules sont positionnés au sein du dispositif de cuisine d'une manière telle que le module de détection reçoit en continu des données à partir du dispositif de cuisine, ces données sont transmises au module de calcul qui calcule les dérivées et les moyennes mobiles et est apte à ajuster les plages de paramètres prédéfinies en conséquence et le module de décision reçoit ces données, les compare avec des plages de paramètres et est apte à transmettre le mécanisme d'arrêt résultant au mécanisme de commande au sein du dispositif de cuisine qui arrête ensuite le fonctionnement.

5. Dispositif de cuisine selon l'une quelconque des revendications précédentes, **caractérisé en ce que** lesdits modules (détection, calcul, décision) peuvent faire partie d'une unique unité centrale de traitement.

6. Dispositif de cuisine selon l'une quelconque des revendications précédentes, **caractérisé en ce que** le moyen de commande par utilisateur est conçu pour permettre à l'utilisateur de choisir entre diverses quantités des aliments traités ou divers types du produit préparé, par exemple la fermeté d'une crème fouettée, qui conduit à l'ajustement des paramètres déclenchant le module de décision.

7. Dispositif de cuisine selon l'une quelconque des revendications précédentes, **caractérisé en ce que** le dispositif de cuisine est conçu pour réaliser la fonction d'arrêt automatique dans le traitement de fouettage de crème.

8. Dispositif de cuisine selon l'une quelconque des revendications précédentes, **caractérisé en ce que** le dispositif de cuisine est conçu pour réaliser la fonction d'arrêt automatique dans le traitement de fouettage de blancs d'œufs.

9. Dispositif de cuisine selon l'une quelconque des revendications précédentes, **caractérisé en ce que** le dispositif de cuisine est conçu pour réaliser la fonction d'arrêt automatique dans le traitement de pétrissage.

**Figure 1**

**Figure 2**

**Figure 3**

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5539288 A
- EP 0555902 B1
- JP 2001095408 B
- US 4747690 A
- US 5556198 A
- US 6656515 A
- US 2006086843 A1